# EUROPEAN PATENT APPLICATION

(11) **EP 4 826 962 A1**
(43) Date of publication of application: **21.10.2026**
(21) Application number: 24903586.6
(22) Date of filing: 04.12.2024
(51) Int. Cl.: H02K 1/2733, H02K 15/035

(54) **ROTOR AND ROTOR MANUFACTURING METHOD**

(30) Priority: 11.12.2023 JP 2023208747
(71) Applicant: DENSO CORPORATION, Kariya-city, Aichi 448-8661 (JP)
(72) Inventor: MATSUMOTO, Kuniaki, Kariya-city, Aichi 448-8661 (JP); IMAYASU, Shinya, Kariya-city, Aichi 448-8661 (JP); OZAKI, Kengo, Kariya-city, Aichi 448-8661 (JP)
(74) Representative: Kuhnen & Wacker Patent- und Rechtsanwaltsbüro PartG mbB
(86) International application number: PCT/JP2024/042950
(87) International publication number: WO 2025/126929

(57) **Abstract**

A rotor (10) includes an annular magnet portion (22) including multiple permanent magnets (31) arranged in a circumferential direction to have an annular shape, and a scattering prevention member (23) covering an entire circumference of an outer peripheral surface (22a) of the annular magnet portion. The scattering prevention member includes a sheet material (51) spirally wound on a winding range (Aw) that includes at least the entire circumference of the outer peripheral surface of the annular magnet portion. The sheet material is made of a fiber-reinforced resin material in which a fiber bundle (52) is solidified with a resin base material (53). The scattering prevention member includes multiple layers (X1, X2, X3, X4, X5, X6, X7) formed of a single continuous portion of the sheet material and laminated with each other in a radial direction, and a transition portion (61, 62, 63, 64, 65, 66) being a part of the single continuous portion of the sheet material positioned between ones of the layers adjacent to each other. Each of the multiple layers is a portion of the sheet material spirally wound on the winding range around an axis (L1) of the rotor. The transition portion is located at an end portion (E1, E2) of the winding range facing in an axial direction and includes a straight portion (70) extending straight in an imaginary plane perpendicular to the axis.

## Description

### CROSS REFERENCE TO RELATED APPLICATION

This application is based on Japanese Patent Application No. 2023-208747 filed on December 11, 2023, the contents of which are incorporated herein by reference.

### TECHNICAL FIELD

The present disclosure relates to a rotor in a motor and a method for manufacturing the rotor.

### BACKGROUND ART

For example, a rotor described in Patent Literature 1 includes an annular magnet portion formed by arranging multiple permanent magnets annularly in a circumferential direction, and a scattering prevention member covering an entire outer peripheral surface of the annular magnet portion in the circumferential direction. The scattering prevention member is made of a fiber-reinforced resin material obtained by solidifying fiber bundles with a resin base material. In making the scattering prevention member, first, a sheet material in which the fiber bundles are impregnated with the resin base material is spirally wound around the outer periphery of the annular magnet portion, thereby forming a first layer. Thereafter, the sheet material is spirally wound on an outer peripheral surface of the first layer to form a second layer. In this way, after forming multiple layers with the sheet material, the resin base material of the sheet material is melted and cured by heating the multiple layers. Thus, the cylindrical scattering prevention member is formed on the outer periphery of the annular magnet portion.

### PRIOR ART LITERATURE

### PATENT LITERATURE

Patent Literature 1: JP 6969988 B2

### SUMMARY OF INVENTION

In the rotor as described above, it is conceivable to continuously wind a single sheet material over the rotor to form multiple layers of the scattering prevention member. In this case, if the spiral angle of the sheet material is changed abruptly at a transition portion between adjacent layers, wrinkles may occur in the sheet material. If wrinkles occur in the sheet material, there is a concern that the effect of fixing the annular magnet portion by the scattering prevention member may decrease.

An objective of the present disclosure is to provide a rotor and a method for manufacturing a rotor capable of reducing the occurrence of wrinkles in a sheet material at a transition portion between adjacent layers in a scattering prevention member.

In a first aspect of the present disclosure, a rotor includes an annular magnet portion and a scattering prevention member. The annular magnet portion includes permanent magnets arranged in a circumferential direction to have an annular shape. The scattering prevention member covers an entire circumference of an outer peripheral surface of the annular magnet portion. The scattering prevention member includes a sheet material. The sheet material is spirally wound on a winding range that includes at least the entire circumference of the outer peripheral surface of the annular magnet portion. The sheet material is made of a fiber-reinforced resin material in which a fiber bundle is solidified with a resin base material. The scattering prevention member includes layers and a transition portion. The layers are formed of a single continuous portion of the sheet material and laminated with each other in a radial direction. The transition portion is a part of the single continuous portion of the sheet material positioned between ones of the layers adjacent to each other. Each of the layers is a portion of the sheet material spirally wound on the winding range around an axis of the rotor. The transition portion is located at an end portion of the winding range facing in an axial direction and includes a straight portion extending straight in an imaginary plane perpendicular to the axis.

According to this configuration, it is possible to reduce an abrupt change in a spiral angle of the sheet material of the scattering prevention member in the transition portion, by providing the straight portion in the transition portion positioned between ones of the layers adjacent to each other. Then, the occurrence of wrinkles of the sheet material in the transition portion can be reduced. As a result, the scattering prevention member can reduce a decrease in the effect of fixing the annular magnet portion.

In a second aspect of the present disclosure, a rotor includes an annular magnet portion and a scattering prevention member. The annular magnet portion includes permanent magnets arranged in a circumferential direction having an annular shape. The scattering prevention member covers an entire circumference of an outer peripheral surface of the annular magnet portion. A method for manufacturing the rotor includes winding a sheet material spirally on a winding range. The winding range includes at least the entire circumference of the outer peripheral surface of the annular magnet portion. The sheet material is made of a fiber-reinforced resin material in which a fiber bundle is solidified with a resin base material. The winding of the sheet material includes forming layers and forming a transition portion. The layers are formed of a single continuous portion of the sheet material and laminated with each other in a radial direction. Each of the layers is a portion of the sheet material spirally wound on the winding range around an axis of the rotor. The transition portion is a part of the single continuous portion of the sheet material positioned between ones of the layers adjacent to each other. The transition portion is located at an end portion of the winding range facing in an axial direction and includes a straight portion extending straight in an imaginary plane perpendicular to the axis.

According to this manufacturing method, it is possible to reduce an abrupt change in a spiral angle of the sheet material of the scattering prevention member in the transition portion, by providing the straight portion in the transition portion positioned between ones of the layers adjacent to each other. Then, the occurrence of wrinkles of the sheet material in the transition portion can be reduced. As a result, the scattering prevention member can reduce a decrease in the effect of fixing the annular magnet portion.

### BRIEF DESCRIPTION OF DRAWINGS

The above objective and other objectives, features, and advantages of the present disclosure will become more apparent from the following detailed description with reference to the accompanying drawings.
FIG. 1 is a perspective view of a rotor in an embodiment.
FIG. 2 is a perspective view showing a manufacturing process of the rotor in the embodiment.
FIG. 3 is a schematic perspective view showing a winding range of a sheet material in the embodiment.
FIG. 4 is an explanatory diagram for explaining a winding mode of the sheet material in the embodiment.
FIG. 5 is a schematic diagram schematically showing a transition portion of the sheet material in the embodiment.
FIG. 6 is an explanatory diagram for explaining the winding mode of the sheet material in the embodiment.
FIG. 7 is an explanatory diagram for explaining a winding mode of a sheet material in a modification.

### DETAILED DESCRIPTIONS

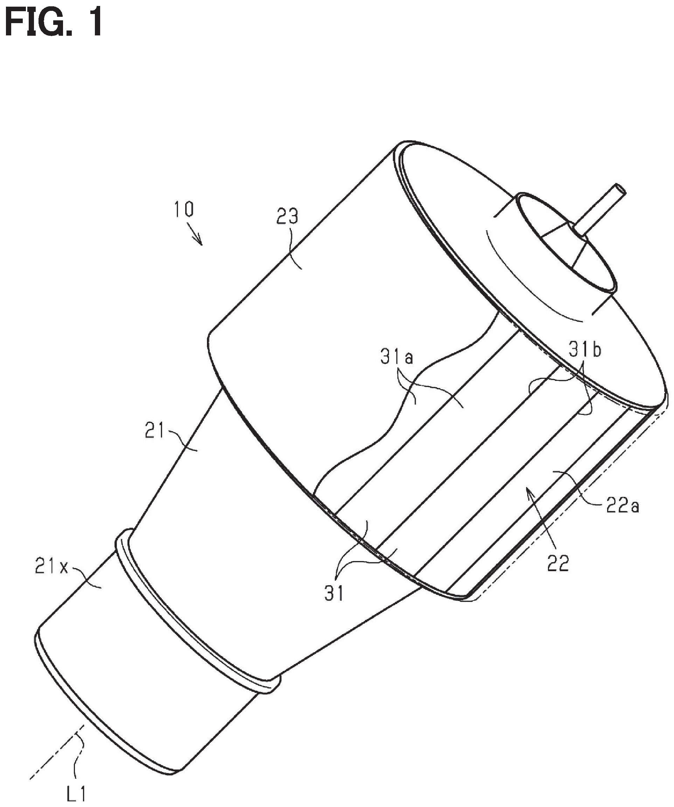

Hereinafter, an embodiment of a rotor and a method for manufacturing a rotor will be described. A rotor 10 of the present embodiment shown in FIG. 1 is one of elements constituting a motor. The rotor 10 is rotatably arranged on an inner peripheral side of a stator (not shown) having a substantially annular shape. The stator generates a rotating magnetic field for rotationally driving the rotor 10 based on energization to its own coil magnetic pole portion. As an example, the rotor 10 of the present embodiment is assumed to be applied to a motor of high-speed rotation specifications in which a maximum rotation speed used is 12000 [rpm] or more. "rpm" is an abbreviation of " revolutions per minute."

### (Configuration of Rotor 10)

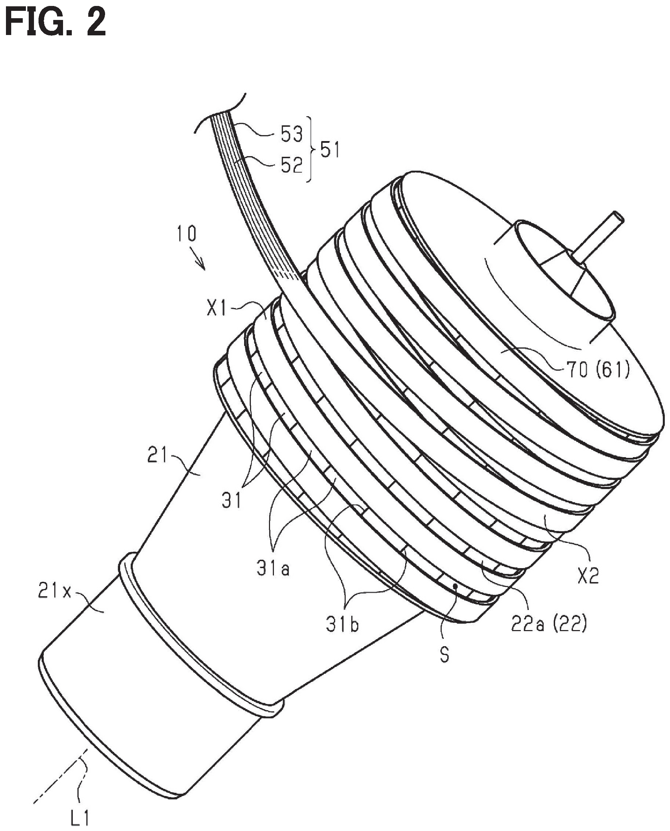

As shown in FIG. 1 and FIG. 2, the rotor 10 of the present embodiment includes a rotor base portion 21, an annular magnet portion 22, and a scattering prevention member 23.

The rotor base portion 21 has a substantially cylindrical shape as a whole. The rotor base portion 21 has, for example, a hollow structure considering weight reduction and the like. One end portion of the rotor base portion 21 in an axial direction is integrally configured as an output shaft portion 21x.

### (Configuration of Annular Magnet Portion 22)

The annular magnet portion 22 having a cylindrical shape centered on an axis L1 of the rotor 10 is held on an outer peripheral surface of the rotor base portion 21. The annular magnet portion 22 is a permanent magnet group formed by multiple permanent magnets 31 arranged in a circumferential direction to have an annular shape. Each permanent magnet 31 forming the annular magnet portion 22 has, for example, a substantially quadrangular shape. An outer peripheral surface 22a of the annular magnet portion 22 is formed by radial outer side surfaces 31a of the respective permanent magnets 31. The outer peripheral surface 22a of the annular magnet portion 22 has a circular shape centered on the axis L1 when viewed from the axial direction. An outer diameter of the annular magnet portion 22 is uniform over an entire length of the annular magnet portion 22 in the axial direction. An inner side surface of each permanent magnet 31 is in contact with the outer peripheral surface of the rotor base portion 21. Further, side end surfaces 31b on both sides of the permanent magnet 31 in the circumferential direction of the rotor 10 are in contact with side end surfaces 31b of adjacent permanent magnets 31. The outer peripheral surface 22a of the annular magnet portion 22 is covered by the scattering prevention member 23 in an entire circumference.

### (Configuration of Scattering Prevention Member 23)

The scattering prevention member 23 constituting the rotor 10 has a substantially cylindrical shape centered on the axis L1. The scattering prevention member 23 covers an entire circumference of the outer peripheral surface 22a of the annular magnet portion 22 . A length of the scattering prevention member 23 in the axial direction is equal to or longer than a length of the annular magnet portion 22 in the axial direction.

### (Regarding Forming of Scattering Prevention Member 23)

As shown in FIG. 2, the scattering prevention member 23 includes a sheet material 51 wound multiple times around a portion including the outer peripheral surface 22a of the annular magnet portion 22 of the rotor 10. The sheet material 51 is a sheet-like material in which fiber bundles 52 are impregnated with a resin base material 53. For the sheet material 51, for example, a carbon fiber reinforced plastic (CFRP material) is used. When the carbon fiber reinforced plastic is used for the sheet material 51, the fiber bundles 52 is made of carbon fibers. The resin base material 53 is made of, for example, a thermosetting resin. In the present embodiment, the sheet material 51 has a volume content of the fiber bundles 52 of, for example, 60 to 70 [%]. The sheet material 51 is melted and cured by being heated, after being wound multiple times on the outer peripheral surface 22a of the annular magnet portion 22. Thus, the substantially cylindrical scattering prevention member 23 is formed on the outer peripheral surface 22a of the annular magnet portion 22.

### (Method for Manufacturing Rotor 10)

Next, a method for manufacturing the rotor 10 will be described together with the operation of the present embodiment. First, the multiple permanent magnets 31 are arranged on the outer peripheral surface of the rotor base portion 21 in the circumferential direction. Thus, the annular magnet portion 22 constituted by the multiple permanent magnets 31 is formed.

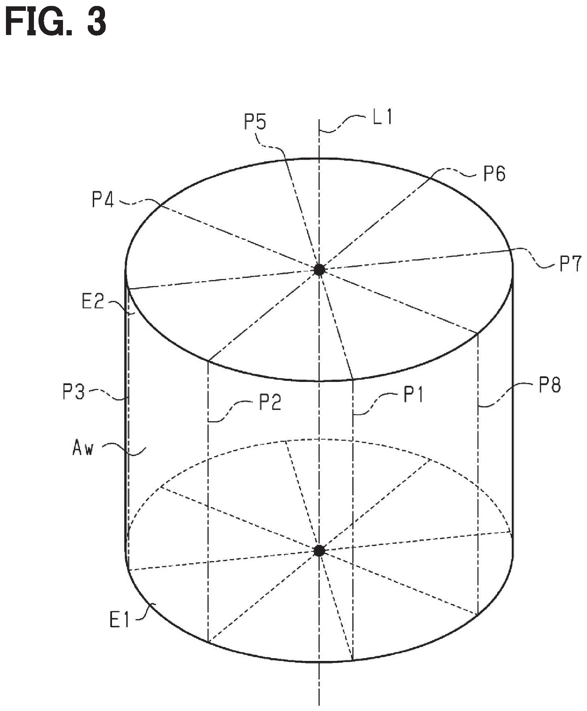

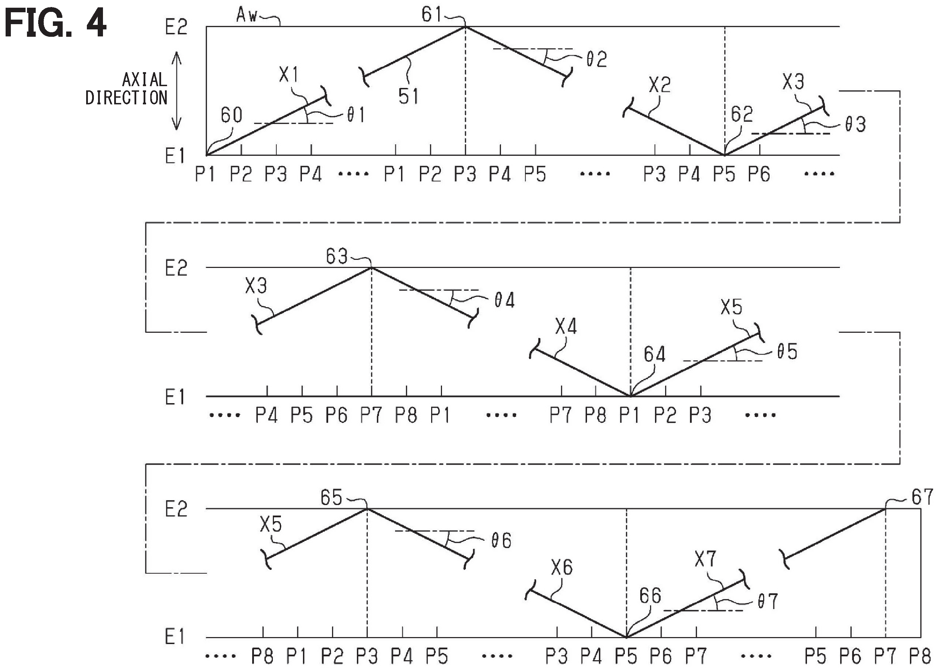

Next, the sheet material 51 is wound around the rotor 10 in a winding range Aw. In FIG. 3, for convenience of explanation, the winding range Aw of the rotor 10 is schematically illustrated as an outer peripheral surface of a cylindrical body. In the present embodiment, for example, the sheet material 51 is wound on the outer peripheral surface 22a of the annular magnet portion 22 from one end portion to the other end portion in the axial direction. The winding range Aw in the present embodiment corresponds to the entire outer peripheral surface 22a of the annular magnet portion 22. In the following description, both end portions of the winding range Aw in the axial direction are referred to as a first end portion E1 and a second end portion E2, respectively. Further, in the following description, in the winding range Aw, eight locations set at equal intervals in the circumferential direction centered on the axis L1 are referred to as a first location P1, a second location P2, a third location P3, a fourth location P4, a fifth location P5, a sixth location P6, a seventh location P7, and an eighth location P8 in order in the circumferential direction. The first location P1 to the eighth location P8 are set at intervals of 45 degrees in the circumferential direction. Further, FIG. 4 schematically shows a developed view of the sheet material 51 spirally wound in the winding range Aw.

The scattering prevention member 23 is formed by winding a single sheet material 51 to form multiple layers. First, a first layer X1 is formed, and the first layer X1 is an innermost circumferential side of the scattering prevention member 23 and is in contact with the outer peripheral surface 22a of the annular magnet portion 22. In forming the first layer X1, the sheet material 51 is spirally wound over the winding range Aw, for example, from the first end portion E1 to the second end portion E2. As shown in FIG. 4, a winding start portion 60 of the sheet material 51 when forming the first layer X1 is set at the first location P1 of the first end portion E1 of the winding range Aw. The winding start portion 60 is, for example, an end portion in a longitudinal direction of the sheet material 51.

The first layer X1 is wound multiple turns in a spiral shape having a first spiral angle θ1. The first layer X1 is wound from the first location P1 of the first end portion E1, as a winding start location, toward the second end portion E2. The number of turns of the spiral is determined by the axial length of the winding range Aw, a diameter of the winding range Aw, the first spiral angle θ1, a width of the sheet material 51, and the like. Then, a winding end location of the first layer X1 is set at the third location P3 of the second end portion E2 of the winding range Aw. In each layer (the first layer X1 to a seventh layer X7) of the scattering prevention member 23 including the first layer X1, the sheet material 51 is spirally wound so that, for example, a space S (see FIG. 2) is left between portions of the sheet material 51 adjacent to each other in the axial direction. Further, the first layer X1 to the seventh layer X7 are layers laminated in the radial direction.

Next, a second layer X2 is wound with the same sheet material 51 as the sheet material 51 forming the first layer X1, continuously from the winding end location of the first layer X1. Winding directions in the first layer X1 and the second layer X2 are mutually the same direction (for example, both are a clockwise direction). Here, a portion of the sheet material 51 transitioning from the first layer X1 to the second layer X2 is referred to as a first transition portion 61. The first transition portion 61 is a winding end portion of the first layer X1 and is a winding start portion of the second layer X2. In other words, a location of the first transition portion 61 is set at the third location P3 of the second end portion E2 of the winding range Aw. The second layer X2 is wound multiple turns in a spiral shape having a second spiral angle θ2. The second layer X2 is wound from the location of the first transition portion 61, i.e., the third location P3 of the second end portion E2 as a winding start location, toward the first end portion E1. FIG. 2 shows a state in the middle of winding the second layer X2.

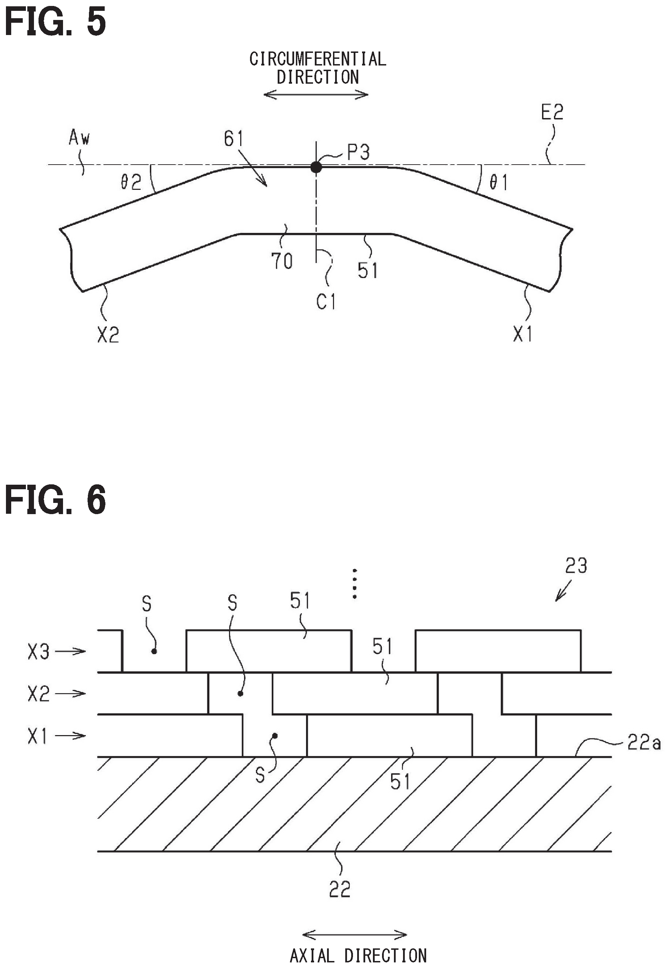

As shown in FIG. 5, the first transition portion 61 includes a straight portion 70 extending in an imaginary plane perpendicular to the axis L1 of the rotor 10. When the rotor 10 is viewed from a radially outer side in a direction perpendicular to the axis L1, the straight portion 70 has a linear shape perpendicular to the axis L1. In other words, the straight portion 70 is not inclined with respect to the axial direction, unlike a portion where the sheet material 51 is spirally wound. The shape of the straight portion 70 viewed in the axial direction has a curved shape along the outer peripheral surface 22a of the annular magnet portion 22.

The straight portion 70 is provided at a boundary between the first layer X1 and the second layer X2. In other words, at the first transition portion 61, transition is made from the first layer X1 having the first spiral angle θ1 to the second layer X2 having the second spiral angle θ2 via the straight portion 70 having no inclination angle with respect to the axial direction. In this way, since the first transition portion 61 includes the straight portion 70, it is possible to reduce abrupt deformation of the sheet material 51 at the first transition portion 61. In the present embodiment, the second spiral angle θ2 is set to, for example, an angle symmetric with respect to the first spiral angle θ1. In other words, when the first spiral angle θ1 is a positive value and the second spiral angle θ2 is a negative value, absolute values of the first spiral angle θ1 and the second spiral angle θ2 are the same. Further, the straight portion 70 of the first transition portion 61 is formed at the third location P3 in the circumferential direction of the winding range Aw. Specifically, a position of the straight portion 70 in the circumferential direction is set such that a circumferential center C1 of the straight portion 70 coincides with the third location P3.

As shown in FIG. 4, a winding end location of the second layer X2 where winding is started from the first transition portion 61 is set at the fifth location P5 of the first end portion E1 of the winding range Aw. At the fifth location P5, a second transition portion 62 similar to the first transition portion 61 is formed. In other words, the second layer X2 transitions to a third layer X3 via the second transition portion 62. The second transition portion 62 includes the straight portion 70 similarly to the first transition portion 61.

The third layer X3 is wound multiple turns in a spiral shape having a third spiral angle θ3 from the position of the second transition portion 62, i.e., the fifth location P5 of the first end portion E1 as a winding start location toward the second end portion E2. The third spiral angle θ3 is set to, for example, the same angle as the first spiral angle θ1. Then, a winding end location of the third layer X3 is set at the seventh location P7 of the second end portion E2 of the winding range Aw.

The scattering prevention member 23 of the present embodiment includes layers up to the seventh layer X7, formed by continuously winding the single sheet material 51. When winding the first layer X1 to the seventh layer X7 using the sheet material 51 described above, the sheet material 51 is wound while tension is applied in the longitudinal direction of the sheet material 51.

The third layer X3 transitions to a fourth layer X4 via a third transition portion 63 at the second end portion E2 of the winding range Aw. A position of the third transition portion 63 in the circumferential direction is set at the seventh location P7. The fourth layer X4 transitions to a fifth layer X5 via a fourth transition portion 64 at the first end portion E1 of the winding range Aw. A position of the fourth transition portion 64 in the circumferential direction is set at the first location P1.

The fifth layer X5 transitions to a sixth layer X6 via a fifth transition portion 65 at the second end portion E2 of the winding range Aw. A position of the fifth transition portion 65 in the circumferential direction is set at the third location P3. The sixth layer X6 transitions to the seventh layer X7 via a sixth transition portion 66 at the first end portion E1 of the winding range Aw. A position of the sixth transition portion 66 in the circumferential direction is set at the fifth location P5. Each of the first transition portion 61 to the sixth transition portion 66 includes the straight portion 70.

The seventh layer X7 is wound multiple turns in a spiral shape from the position of the sixth transition portion 66 as a winding start location toward the second end portion E2. Then, a winding end location of the seventh layer X7 is set at the seventh location P7 of the second end portion E2 of the winding range Aw. A winding end portion of the seventh layer X7 is, for example, a winding end portion 67 of the sheet material 51. The winding end portion 67 is an end portion opposite to the winding start portion 60, in the single sheet material 51 forming the scattering prevention member 23.

As described above, in the scattering prevention member 23 of the present embodiment, each of the first layer X1 to the seventh layer X7 includes the winding start location and the winding end location offset by 90 degrees in the circumferential direction. Further, in each of the first layer X1 to the seventh layer X7, both end portions of the winding range Aw in the axial direction, i.e., the winding start portion and the winding end portion are referred to as layer end portions. Layer end portions of the first layer X1 on both sides in the axial direction are the winding start portion 60 and the first transition portion 61. Layer end portions of the second layer X2 on both sides in the axial direction are the first transition portion 61 and the second transition portion 62. Layer end portions of the third layer X3 on both sides in the axial direction are the second transition portion 62 and the third transition portion 63. Layer end portions of the fourth layer X4 on both sides in the axial direction are the third transition portion 63 and the fourth transition portion 64. Layer end portions of the fifth layer X5 on both sides in the axial direction are the fourth transition portion 64 and the fifth transition portion 65. Layer end portions of the sixth layer X6 on both sides in the axial direction are the fifth transition portion 65 and the sixth transition portion 66. And, layer end portions of the seventh layer X7 on both sides in the axial direction are the sixth transition portion 66 and the winding end portion 67 of the sheet material 51.

In the scattering prevention member 23 formed by winding the sheet material 51 as described above, the layer end portions of each of the first layer X1 to the seventh layer X7 are located at equal intervals in the circumferential direction at each of the first end portion E1 and the second end portion E2 in the winding range Aw.

Specifically, at the first end portion E1 of the winding range Aw, the winding start portion 60 and the fourth transition portion 64 are located at the first location P1, and the second transition portion 62 and the sixth transition portion 66 are located at the fifth location P5 which is on the opposite side by 180 degrees in the circumferential direction from the first location P1. In other words, the winding start portion 60, the second transition portion 62, the fourth transition portion 64, and the sixth transition portion 66 are arranged at positions spaced by 180 degrees at the first end portion E1 of the winding range Aw.

Further, at the second end portion E2 of the winding range Aw, the first transition portion 61 and the fifth transition portion 65 are located at the third location P3, and the third transition portion 63 and the winding end portion 67 are located at the seventh location P7 which is on the opposite side by 180 degrees in the circumferential direction from the third location P3. In other words, the first transition portion 61, the third transition portion 63, the fifth transition portion 65, and the winding end portion 67 are arranged at positions spaced by 180 degrees at the second end portion E2 of the winding range Aw.

Further, as viewed over the entire winding range Aw, the respective layer end portions of the first layer X1 to the seventh layer X7, i.e., the winding start portion 60, the first transition portion 61 to the sixth transition portion 66, and the winding end portion 67 are arranged at positions of the winding range Aw spaced by 90 degrees in the circumferential direction. Further, at positions (the first location P1, the third location P3, the fifth location P5, and the seventh location P7) of the winding range Aw spaced by 90 degrees in the circumferential direction, the same number (two in the present embodiment) of layer end portions are arranged respectively.

In the present embodiment, in an N-th layer and an (N+2)-th layer in the scattering prevention member 23, a spiral angle of the sheet material 51 with respect to the axis L1 of the rotor 10 is set to be equal. Specifically, the first spiral angle θ1 in the first layer X1, the third spiral angle θ3 in the third layer X3, the fifth spiral angle θ5 in the fifth layer X5, and the seventh spiral angle θ7 in the seventh layer X7 are set to angles equal to each other. Further, the second spiral angle θ2 in the second layer X2, the fourth spiral angle θ4 in the fourth layer X4, and the sixth spiral angle θ6 in the sixth layer X6 are set to angles equal to each other.

Further, between the N-th layer and the (N+2)-th layer, the winding start location during spirally winding is offset in the circumferential direction. Thus, as shown in FIG. 6 for example, although the spiral angles (the first spiral angle θ1 and the third spiral angle θ3) are equal in the first layer X1 and the third layer X3, the sheet material 51 forming the first layer X1 and the sheet material 51 forming the third layer X3 are positioned to be axially offset from each other. Thus, a position of the space S in the first layer X1 and a position of the space S in the third layer X3 do not coincide. Thus, a configuration is achieved in which the outer peripheral surface 22a of the annular magnet portion 22 is less likely to be exposed to the radially outer side from the space S.

After winding the first layer X1 to the seventh layer X7 using the sheet material 51 as described above, a heating process of melting and curing the resin base material 53 by heating the sheet material 51 is performed. Thus, the cylindrical scattering prevention member 23 in which the resin base material 53 is integrally fused and cured is formed on the outer periphery of the annular magnet portion 22. In the heating process, it is suitable to heat the sheet material 51 while maintaining a state where tension is applied to the sheet material 51 by a jig (not shown) or the like.

### (Effects of Present Embodiment)

Hereinafter, the operation of the present embodiment will be described. (1) Each of the multiple transition portions (the first transition portion 61 to the sixth transition portion 66) included in the scattering prevention member 23 includes the straight portion 70. The straight portion 70 is located at the end portion of the winding range Aw in the axial direction (the first end portion E1 or the second end portion E2) and extends in an imaginary plane perpendicular to the axis L1. According to this configuration, it is possible to reduce an abrupt change in the spiral angle of the sheet material 51 in each of the first transition portion 61 to the sixth transition portion 66, by providing the straight portion 70 in each of the first transition portion 61 to the sixth transition portion 66. Thus, it is possible to reduce the occurrence of wrinkles in the sheet material 51 at each of the first transition portion 61 to the sixth transition portion 66, and as a result, it becomes possible to reduce a decrease in the fixing effect of the annular magnet portion 22 by the scattering prevention member 23.
(2) The scattering prevention member 23 includes layer end portions which are end portions of each of the first layer X1 to the seventh layer X7 in the axial direction. The layer end portions include the winding start portion 60 in the sheet material 51, the winding end portion 67 in the sheet material 51, and the first transition portion 61 to the sixth transition portion 66. The layer end portions are arranged at multiple circumferential positions (the first location P1, the third location P3, the fifth location P5, and the seventh location P7) within the winding range Aw, the circumferential positions are equally spaced from each other, and the number (e.g., two) of the layer end portions located at each circumferential position is equal. According to this configuration, the layer end portions included in the scattering prevention member 23 (the winding start portion 60, the first transition portion 61 to the sixth transition portion 66, and the winding end portion 67) can be arranged in a well-balanced manner in the circumferential direction. Thus, it becomes possible to reduce the occurrence of weight imbalance of the scattering prevention member 23 in the circumferential direction. As a result, it becomes possible to reduce the occurrence of vibration and the like during rotation of the rotor 10.
(3) In each of the first layer X1 to the seventh layer X7, the sheet material 51 is spirally wound such that portions of the sheet material adjacent to each other in the axial direction are spaced apart by the space S. According to this configuration, when spirally winding the sheet material 51, it is possible to reduce a partial overlap of portions of the sheet material 51 adjacent to each other in the axial direction. Thus, it is possible to reduce the occurrence of a portion protruding to the radially outer side due to the partial overlap of the portions of the sheet material 51 adjacent to each other in the axial direction, and it becomes possible to achieve uniformity of the outer diameter of the scattering prevention member 23.
(4) The N-th layer and the (N+2)-th layer of the multiple layers (the first layer X1 to the seventh layer X7) of the scattering prevention member 23 have the same spiral angle of the sheet material 51 with respect to the axis L1. The layer end portions of the N-th layer are circumferentially offset from the layer end portions of the (N+2)-th layer. According to this configuration, while making the spiral angles equal in the N-th layer and the (N+2)-th layer, the position of the sheet material 51 forming the N-th layer and the position of the sheet material 51 forming the (N+2)-th layer are offset in the axial direction. Thus, since the positions of the space S do not coincide between the N-th layer and the (N+2)-th layer, a configuration is achieved in which the outer peripheral surface 22a of the annular magnet portion 22 is less likely to be exposed to the radially outer side from the space S.

### (Other Embodiments)

The above embodiment can be implemented with modifications as follows. The above embodiment and the following modifications can be implemented in combination with each other within a range not technically contradictory.

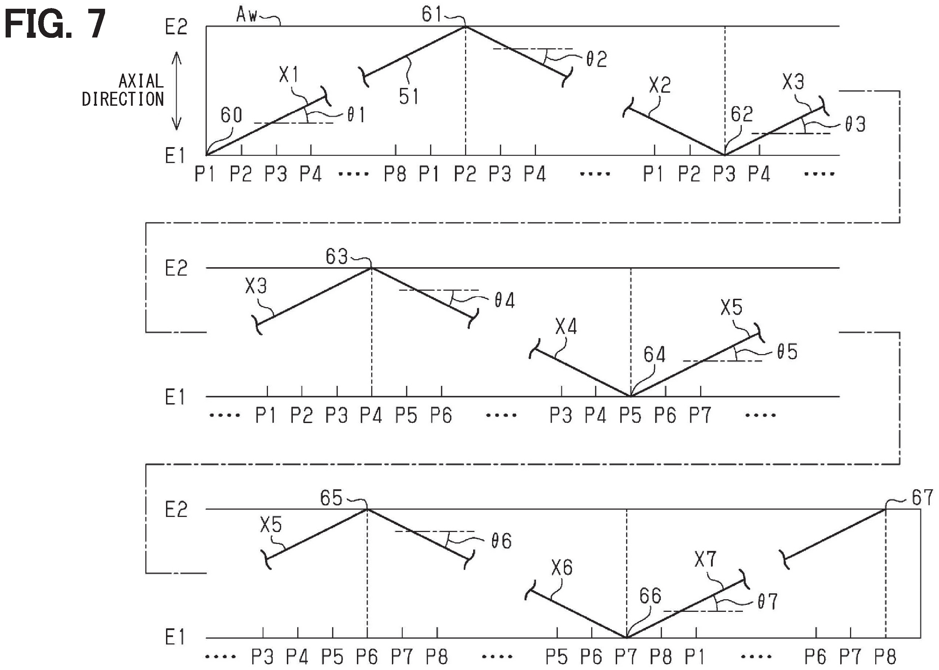

An arrangement of the layer end portions (the winding start portion 60, the first transition portion 61 to the sixth transition portion 66, and the winding end portion 67) in the scattering prevention member 23 is not limited to the above embodiment, and for example, may be modified to a configuration shown in FIG. 7.

In a configuration shown in FIG. 7, one layer end portion is arranged at each position of the winding range Aw at intervals of 45 degrees in the circumferential direction. Specifically, the winding start portion 60 in the first layer X1 is set at the first location P1 of the first end portion E1 of the winding range Aw. The first transition portion 61 between the first layer X1 and the second layer X2 is set at the second location P2 of the second end portion E2 of the winding range Aw. The second transition portion 62 between the second layer X2 and the third layer X3 is set at the third location P3 of the first end portion E1 of the winding range Aw. The third transition portion 63 between the third layer X3 and the fourth layer X4 is set at the fourth location P4 of the second end portion E2 of the winding range Aw. The fourth transition portion 64 between the fourth layer X4 and the fifth layer X5 is set at the fifth location P5 of the first end portion E1 of the winding range Aw. The fifth transition portion 65 between the fifth layer X5 and the sixth layer X6 is set at the sixth location P6 of the second end portion E2 of the winding range Aw. The sixth transition portion 66 between the sixth layer X6 and the seventh layer X7 is set at the seventh location P7 of the first end portion E1 of the winding range Aw. Then, the winding end portion 67 in the seventh layer X7 is set at the eighth location P8 of the second end portion E2 of the winding range Aw. Even with such a configuration, since the same number (one) of layer end portions are arranged respectively at positions of the winding range Aw (the first location P1 to the eighth location P8) which are equally spaced in the circumferential direction, the layer end portions included in the scattering prevention member 23 can be arranged in a well-balanced manner in the circumferential direction. Thus, it becomes possible to reduce the occurrence of weight imbalance of the scattering prevention member 23 in the circumferential direction.

The N-th layer and the (N+2)-th layer in the multiple layers (the first layer X1 to the seventh layer X7) of the scattering prevention member 23 may have the spiral angles of the sheet material 51 with respect to the axis L1 different from each other. For example, considering the first layer X1 and the third layer X3 as an example, the first spiral angle θ1 and the third spiral angle θ3 may be set to angles different from each other.

In all or some of the layers of the first layer X1 to the seventh layer X7 in the scattering prevention member 23, winding may be performed so that axial end surfaces of portions of the sheet material 51 adjacent to each other in the axial direction are in contact with each other. Further, in all or some of the layers of the first layer X1 to the seventh layer X7 in the scattering prevention member 23, winding may be performed so that axial ends of the portions of the sheet material 51 adjacent to each other in the axial direction overlap each other.

In the scattering prevention member 23, the number of layers of the multiple layers formed continuously by the single sheet material 51 is not limited to the above embodiment, and may be any of 2 to 6 layers, or 8 layers or more. The number of transition portions between adjacent layers is also changed by changing the number of layers in the scattering prevention member 23.

The winding range Aw of the sheet material 51 is not limited to the range including only the outer peripheral surface 22a of the annular magnet portion 22, and may be set to a range including a part of the rotor base portion 21 in addition to the annular magnet portion 22.

In the rotor 10 of the above embodiment, the fiber bundle 52 included in the sheet material 51 can be changed to fibers other than carbon fibers. Further, the configuration of the rotor 10 may be changed as appropriate. Further, the shape of the rotor base portion 21 may be changed as appropriate.

In the above embodiment, a radial type in which the rotor 10 and the stator face each other in the radial direction is applied, but an axial type in which the rotor and the stator face each other in the axial direction may be applied.

The present disclosure has been described in accordance with the embodiment, but it is understood that the present disclosure is not limited to the embodiment or the structure. The present disclosure also includes various modifications and modifications within an equivalent range. In addition, various combinations and forms, and further, other combinations and forms including only one element, more, or less than that, are also within the scope and spirit of the present disclosure.

### (Aspects of the Present Disclosure)

The features of the present disclosure are shown as follows.

### Aspect 1

A rotor (10) includes an annular magnet portion (22) and a scattering prevention member (23). The annular magnet portion includes permanent magnets (31) arranged in a circumferential direction to have an annular shape. The scattering prevention member covers an entire circumference of an outer peripheral surface (22a) of the annular magnet portion. The scattering prevention member includes a sheet material (51). The sheet material (51) is spirally wound on a winding range (Aw) that includes at least the entire circumference of the outer peripheral surface of the annular magnet portion. The sheet material is made of a fiber-reinforced resin material in which a fiber bundle (52) is solidified with a resin base material (53). The scattering prevention member includes layers (X1, X2, X3, X4, X5, X6, X7) and a transition portion (61, 62, 63, 64, 65, 66). The layers (X1, X2, X3, X4, X5, X6, X7) are formed of a single continuous portion of the sheet material and laminated with each other in a radial direction. The transition portion (61, 62, 63, 64, 65, 66) is a part of the single continuous portion of the sheet material positioned between ones of the layers adjacent to each other. Each of the layers is a portion of the sheet material spirally wound on the winding range around an axis (L1) of the rotor. The transition portion is located at an end portion (E1, E2) of the winding range facing in an axial direction and includes a straight portion (70) extending straight in an imaginary plane perpendicular to the axis.

### Aspect 2

In the rotor according to aspect 1, the scattering prevention member includes layer end portions (60, 61, 62, 63, 64, 65, 66, 67). The layer end portions are end portions of each of the layers facing in the axial direction. The layer end portions include a winding start portion (60) of the sheet material, a winding end portion (67) of the sheet material, and the transition portion. The layer end portions are arranged at multiple circumferential positions within the winding range. The circumferential positions are equally spaced from each other in the circumferential direction. A number of the layer end portions located at each circumferential position is equal.

### Aspect 3

In the rotor according to aspect 1 or 2, the sheet material is spirally wound such that a space (S) is provided between portions of the sheet material adjacent to each other in the axial direction in each of the layers.

### Aspect 4

In the rotor according to aspect 3, the scattering prevention member includes layer end portions (60, 61, 62, 63, 64, 65, 66, 67). The layer end portions are end portions of each of the layers facing in the axial direction. An innermost layer of the layers in the radial direction is a first layer. For each integer N for which an (N+2)-th layer exists, an N-th layer and an (N+2)-th layer have a same spiral angle of the sheet material with respect to the axis. The layer end portions of the N-th layer are offset in the circumferential direction from the layer end portions of the (N+2)-th layer.

### Aspect 5

A rotor (10) includes an annular magnet portion (22) and a scattering prevention member (23). The annular magnet portion includes permanent magnets (31) arranged in a circumferential direction having an annular shape. The scattering prevention member covers an entire circumference of an outer peripheral surface (22a) of the annular magnet portion. A method for manufacturing the rotor includes winding a sheet material (51) spirally on a winding range (Aw). The winding range includes at least the entire circumference of the outer peripheral surface of the annular magnet portion. The sheet material (51) is made of a fiber-reinforced resin material in which a fiber bundle (52) is solidified with a resin base material (53). The winding of the sheet material includes forming layers (X1, X2, X3, X4, X5, X6, X7) and forming a transition portion (61, 62, 63, 64, 65, 66). The layers are formed of a single continuous portion of the sheet material and laminated with each other in a radial direction. Each of the layers is a portion of the sheet material spirally wound on the winding range around an axis (L1) of the rotor. The transition portion (61, 62, 63, 64, 65, 66) is a part of the single continuous portion of the sheet material positioned between ones of the layers adjacent to each other. The transition portion is located at an end portion (E1, E2) of the winding range facing in an axial direction and includes a straight portion (70) extending straight in an imaginary plane perpendicular to the axis.

## Claims

1. A rotor (10) comprising:
an annular magnet portion (22) including permanent magnets (31) arranged in a circumferential direction to have an annular shape; and
a scattering prevention member (23) covering an entire circumference of an outer peripheral surface (22a) of the annular magnet portion, wherein
the scattering prevention member includes a sheet material (51) spirally wound on a winding range (Aw) that includes at least the entire circumference of the outer peripheral surface of the annular magnet portion,
the sheet material is made of a fiber-reinforced resin material in which a fiber bundle (52) is solidified with a resin base material (53),
the scattering prevention member includes:
layers (X1, X2, X3, X4, X5, X6, X7) formed of a single continuous portion of the sheet material and laminated with each other in a radial direction; and
a transition portion (61, 62, 63, 64, 65, 66) being a part of the single continuous portion of the sheet material positioned between ones of the layers adjacent to each other,
each of the layers is a portion of the sheet material spirally wound on the winding range around an axis (L1) of the rotor, and
the transition portion is located at an end portion (E1, E2) of the winding range facing in an axial direction and includes a straight portion (70) extending straight in an imaginary plane perpendicular to the axis.

2. The rotor according to claim 1, wherein
the scattering prevention member includes layer end portions (60, 61, 62, 63, 64, 65, 66, 67) that are end portions of each of the layers facing in the axial direction,
the layer end portions include a winding start portion (60) of the sheet material, a winding end portion (67) of the sheet material, and the transition portion, and
the layer end portions are arranged at multiple circumferential positions within the winding range, the circumferential positions are equally spaced from each other in the circumferential direction, and a number of the layer end portions located at each circumferential position is equal.

3. The rotor according to claim 1, wherein
the sheet material is spirally wound such that a space (S) is provided between portions of the sheet material adjacent to each other in the axial direction in each of the layers.

4. The rotor according to claim 3, wherein
the scattering prevention member includes layer end portions (60, 61, 62, 63, 64, 65, 66, 67) that are end portions of each of the layers facing in the axial direction,
an innermost layer of the layers in the radial direction is a first layer,
for each integer N for which an (N+2)-th layer exists, an N-th layer and an (N+2)-th layer have a same spiral angle of the sheet material with respect to the axis, and
the layer end portions of the N-th layer are offset in the circumferential direction from the layer end portions of the (N+2)-th layer.

5. A method for manufacturing a rotor (10), the rotor including:
an annular magnet portion (22) including permanent magnets (31) arranged in a circumferential direction having an annular shape; and
a scattering prevention member (23) covering an entire circumference of an outer peripheral surface (22a) of the annular magnet portion,
the method comprising
winding a sheet material (51) spirally on a winding range (Aw), the winding range including at least the entire circumference of the outer peripheral surface of the annular magnet portion, the sheet material being made of a fiber-reinforced resin material in which a fiber bundle (52) is solidified with a resin base material (53), wherein
the winding of the sheet material includes:
forming layers (X1, X2, X3, X4, X5, X6, X7) formed of a single continuous portion of the sheet material and laminated with each other in a radial direction, each of the layers being a portion of the sheet material spirally wound on the winding range around an axis (L1) of the rotor; and
forming a transition portion (61, 62, 63, 64, 65, 66) being a part of the single continuous portion of the sheet material positioned between ones of the layers adjacent to each other, and
the transition portion is located at an end portion (E1, E2) of the winding range facing in an axial direction and includes a straight portion (70) extending straight in an imaginary plane perpendicular to the axis.
